# EUROPEAN PATENT SPECIFICATION

(11) **EP 4 419 817 B1**
(45) Date of publication and mention of the grant of the patent: **24.06.2026**
(21) Application number: 22786510.2
(22) Date of filing: 30.09.2022
(51) Int. Cl.: F16J 1/00, F16J 15/3208, F16J 15/56, G01F 11/02, F04B 9/105, F04B 13/02

(54) **PROPORTIONAL VOLUMETRIC DOSING UNIT**
PROPORTIONALE VOLUMETRISCHE DOSIEREINHEIT
UNITÉ DE DOSAGE VOLUMÉTRIQUE PROPORTIONNELLE

(30) Priority: 19.10.2021 IT 202100026780
(43) Date of publication of application: 28.08.2024
(73) Proprietor: Mixtron S.r.l., 42124 Reggio Emilia (IT)
(72) Inventor: BREVINI, Stefano, 42123 Reggio Emilia (IT); BREVINI, Renato, 42121 Reggio Emilia (IT)
(74) Representative: AVERA-IP SRL
(86) International application number: PCT/IB2022/059348
(87) International publication number: WO 2023/067418

(56) References cited:
- WO-A1-2004/011804
- DE-A1- 102015 215 512
- FR-A1- 2 335 755
- US-A- 3 229 855
- US-A1- 2007 289 442
- US-A1- 2011 277 626
- US-A1- 2017 159 821
- US-A1- 2020 379 489
- US-B1- 6 296 153

## Description

### TECHNICAL FIELD

The invention relates to a proportional volumetric dosing unit.

### PRIOR ART

As is well known, a proportional volumetric dosing unit is a device that allows a first fluid to be mixed with a second fluid, for example containing an additive or an active ingredient, for a variety of applications in all those sectors where it is necessary to mix a main fluid with an auxiliary fluid or an additive in precise proportions. The main fluid may typically be water and the auxiliary fluid may be, according to the applications, oils, fertilizers, detergents, chemical products or products intended for the pharmaceutical industry in solution or the like according to the application sector of the dosing unit.

Said dosing units operate without the need to be connected to sources of electric energy, but only due to the effect of the pressure and flow rate of the water.

These dosing units have a (hydraulic) motor in which a piston is made to translate which drives the piston of a pump of the dosing unit itself and which is adapted to suck and push an auxiliary fluid into the motor or into a bypass conduit in fluid communication with the outlet conduit, so that it is mixed with a main fluid flowing through the motor and driving the respective piston thereof.

Specifically, the piston of the motor is slidably inserted into a cylinder along a sliding axis and comprises an annular sealing lip that contacts the cylinder to create a fluid seal.

This annular sealing lip, made of a polymeric material, protrudes from the top of the piston away from it along an inclined direction with respect to the motion sliding axis, which when inserted into the cylinder is elastically deformed by bending in contact with said cylinder. This elastic bending deformation generates a force that keeps a portion of the lip in constant contact with the cylinder.

US 2020/379489 discloses a proportional volumetric doser according to the preamble of claim 1.

One problem with this solution is that over time the deformation of the annular sealing lip can become permanent due to plasticization of the polymeric material of which it is made. When this plasticization occurs, the force that keeps the portion of the lip in contact with the cylinder is lost, and so the seal is no longer able to perform its function.

An object of the present invention is to overcome the aforementioned constraints of the known art by means of the features of the independent claim. The dependent claims outline preferred and/or particularly advantageous aspects of the invention.

### DISCLOSURE OF THE INVENTION

In particular, the invention provides a proportional volumetric dosing unit as defined in claim 1.

Thanks to this solution, even in the event of plasticization of the material of the annular sealing lip, the correct functioning of the seal is guaranteed. In addition, the fact that the elastic element pushes on the lip instead of directly contacting the cylinder ensures a longer service life than if the elastic element were to contact the cylinder directly. This is particularly so because preferably the annular sealing lip is made of a non-elastomeric polymeric material, whereas the elastic element is made of an elastomeric polymeric material.

According to an aspect of the invention, the annular sealing lip may comprise a free end portion and an opposing end portion proximal to the top of the piston, and wherein the elastic element contacts the free end portion.

In this way, the thrust generated by the elastic element is more effective.

According to another aspect of the invention, the elastic element may be annular shaped. In this way, the action of the elastic element is applied evenly across the entire annular sealing lip, thus improving the seal.

This simplifies the design operations of the top portion of the piston and speeds up the assembly operations.

According to another aspect of the invention, the annular sealing lip may comprise an outer annular surface facing the cylinder and partly in contact therewith, and an inner annular surface facing in the opposite direction to the outer annular surface and which is in direct contact with the elastic element. The locking device then comprises a wall that rises from the piston top and is contacted by the elastic element. As a result, there is a closed volume between the inner annular surface, the elastic element and the wall of the locking device. In order to eliminate the difference between the pressure acting on the outer annular surface and the pressure acting on the inner annular surface, thus improving the seal of the lip, the wall includes at least one through-hole which is in direct fluid communication with the closed volume.

According to yet another aspect of the invention, the locking device may comprise a locking body provided with a first annular wall, which rises from a portion of the piston top closer to the sliding axis with respect to a portion of the piston top from which the annular sealing lip rises, and a second annular wall which extends contiguously from the first annular wall in a direction away from the piston sliding axis, and in which the elastic element is interposed directly in contact between the annular sealing lip, the first annular wall and the second annular wall.

According to a further aspect of the invention, the locking device may comprise a fixing flange which is derived from the first annular wall at a right angle thereto and which is screwed to the piston top.

### BRIEF DESCRIPTION OF THE DRAWINGS

Further features and advantages of the invention will be more apparent after reading the following description provided by way of non-limiting example, with the aid of the accompanying drawings.
Figure 1 is a sectional view of a proportional volumetric dosing unit according to the invention.
Figure 2 is an enlargement of detail II of Figure 1.
Figure 3 is an enlargement of detail III of Figure 2.

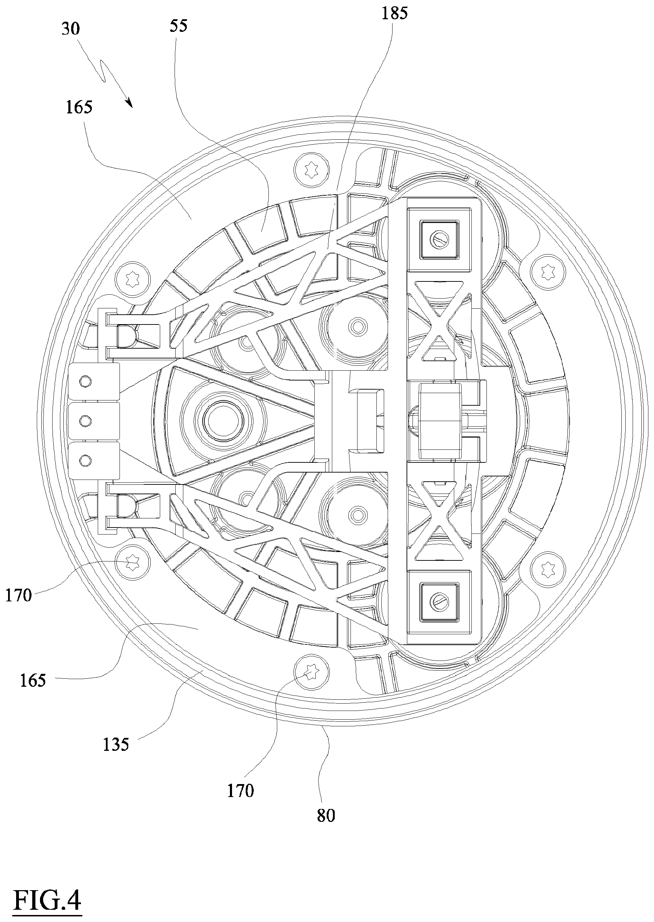

Figure 4 is an upper orthogonal view of a piston of a volumetric dosing unit motor.

### BEST MODE TO IMPLEMENT THE INVENTION

With particular reference to these figures, a proportional volumetric dosing unit has been indicated by 1, which is adapted to mix a main fluid (liquid) entering from an inlet conduit 10 with an auxiliary fluid (liquid) so as to provide at the outlet, in an outlet conduit 15, a mixed fluid (liquid), which is formed by a preset percentage of main fluid and a preset percentage of auxiliary fluid established by the volumetric dosing unit itself.

The proportional volumetric dosing unit 1 has a (hydraulic) motor 20, driven by the flow of the main fluid through the motor, and an auxiliary fluid delivery pump 25, which is attached to and driven by the motor in order to deliver said auxiliary fluid.

The motor 20 comprises a tubular body (to which the pump is fixed), which is in fluid communication with the inlet conduit 10 and the outlet conduit 15, and a piston 30 which is slidably housed in the tubular body along a sliding axis X and which is moved along said sliding axis by the force generated by the main flow of fluid.

The tubular body 35 comprises a cylinder within which the piston 30 is slidably inserted (to size) along the sliding axis X. This piston thus has a central axis coaxial to the sliding axis X.

In addition, the tubular body 35 is closed at the top by a cover (or cap) 40.

The tubular body has an internal volume (partially defined by the cylinder and the cover) divided by the piston into a first chamber 45 in (indirect) fluid communication with the inlet conduit and a second chamber 50 in direct fluid communication with the outlet conduit. The piston is movable along the sliding axis X between a top dead centre position (proximal to the lid) wherein the volume of the first chamber is minimum and the volume of the second chamber is maximum, and a bottom dead centre position where the volume of the first chamber is maximum and the volume of the second chamber is minimum.

Additionally, the piston 30 comprises a top 55 (facing the cover), i.e. an upper top, which, in particular, together with the cylinder and the cover defines the first chamber 45.

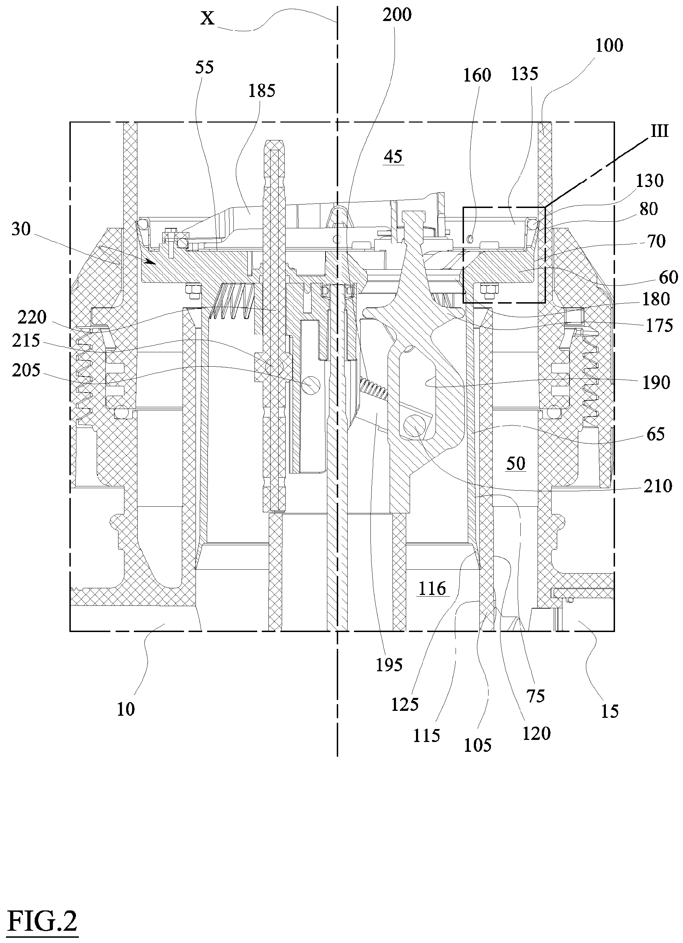

With particular reference to the enlargement of figure 2, the piston 30 is for example a differential type piston, which therefore has a first cylindrical body 60 and a second cylindrical body 65 integral with the first cylindrical body sliding along the sliding axis X.

The second cylindrical body extends, from a face of the first cylindrical body transverse to the sliding axis X and opposite the top 55, coaxially to the first cylindrical body and has a smaller diameter than the diameter of the first cylindrical body. In particular, the first cylindrical body comprises a cylindrical lateral outer surface 70 (coaxial to the sliding axis X) and the second cylindrical body comprises a cylindrical lateral outer surface 75 coaxial to that of the first cylindrical body (and extending from the face of the first cylindrical body opposite the top). Thus, there is an annular surface opposite the top, transverse to the sliding axis X and extending between an end of the cylindrical lateral outer surface 70 proximal to the second cylindrical body at an end of the cylindrical lateral outer surface 75 proximal to the first cylindrical body 60.

The second cylindrical body 65 is preferably a tubular body (thin-walled) having an axial cavity (arranged in accordance with the sliding axis X) in direct fluid communication with the inlet conduit 10.

As mentioned above, the piston 30 has the top 55, e.g. made available by the first cylindrical body (and facing the cover), and also has an annular sealing lip 80 which rises from the top of the piston (or from the outer lateral cylindrical surface 70 of the first cylindrical body 60 or from both), in particular which rises from an outer annular perimeter edge of the top of the piston, and which is applied in contact on the cylinder, thus creating a fluid seal which allows to the first chamber to be divided from the second chamber. If the annular sealing lip were not present, the fluid could flow laterally to the piston in the gap between the cylinder and the piston due to the coupling clearance between said two elements.

The annular sealing lip 80 is in contact with the cylinder at least along a continuous circumference, i.e. without interruption. Preferably it is in contact therewith along a continuous cylindrical surface.

The seal on the cylinder is achieved by an end portion (or free end) of the annular sealing lip 80 distal from the top. In particular, such end portion protrudes externally with respect to the cylindrical lateral outer surface 70 of the first cylindrical body 60 in the direction away from the sliding axis X. The annular sealing lip 80 is substantially inclined with respect to the sliding axis X.

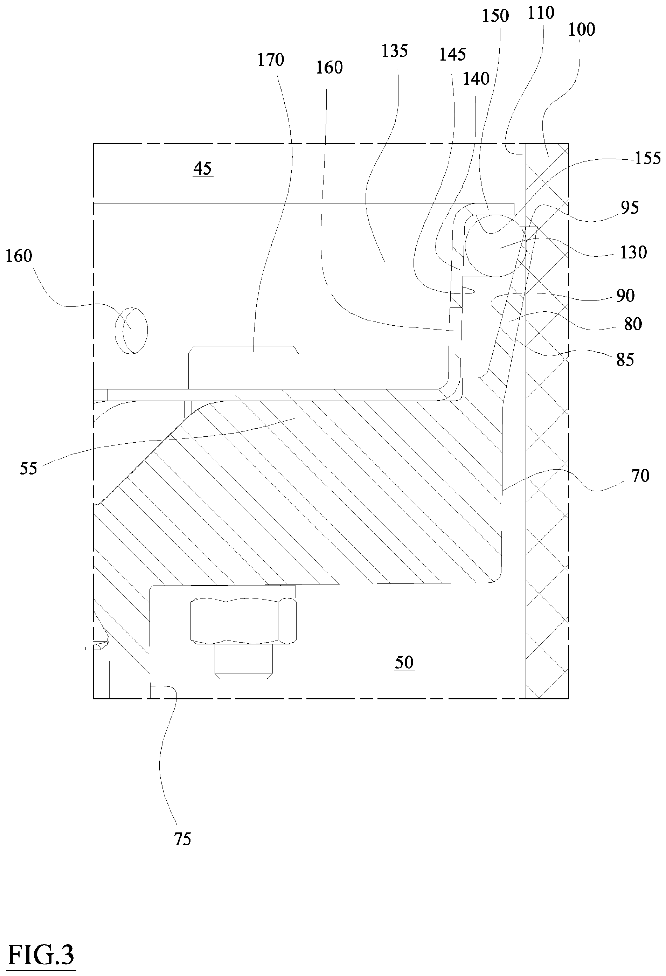

In the illustrated embodiment, see in particular the enlargement of figure 3, the annular sealing lip 80 comprises an outer annular surface 85 (truncated cone), which faces the cylinder in which the piston slides, i.e. the first cylindrical body of the piston, and is in contact with the cylinder and coaxial to the sliding axis X. For example, the outer annular surface 85 extends directly from the piston, i.e. from its first cylindrical portion, in a direction away from the top of the piston and towards the cylinder in which the piston slides, i.e. the first cylindrical body of the piston.

The annular sealing lip 80 then comprises an inner annular surface 90 (truncated cone), which faces in the opposite direction to the outer annular surface 85, is coaxial to the sliding axis X and is closer (when measuring distances along a section plane perpendicular to the sliding axis X) to the sliding axis X than the outer annular surface 85. For example, the inner annular surface extends directly from the piston, i.e., from its first cylindrical portion, in a direction away from the top of the piston and towards the cylinder in which the piston slides, i.e., the first cylindrical body of the piston, preferably in a direction parallel to the direction of the outer annular surface 85.

Such annular surfaces are joined, at the free end of the annular sealing lip 80, by an annular edge 95, e.g. flat and transverse to both the outer annular surface and the inner annular surface.

The annular sealing lip 80 has a reduced thickness, in particular understood as the distance between the profile generated by the section of the outer annular surface 85 and the profile of the inner annular surface 90 along a section plane containing the sliding axis X, i.e., less than the extension of the annular sealing lip along its direction away from the top of the piston.

This reduced thickness is such that, also depending on the material of which the lip is made, the annular seal bends towards the sliding axis X once the piston is inserted into the tubular body due to the contact between the lip and the cylinder.

In further detail, the annular sealing lip is shaped like a body obtained by the revolution about the sliding axis X of a template formed by a first rectilinear segment which develops from the top 55 of the piston or from the cylindrical outer lateral surface 70 so as to radially protrude with respect to said cylindrical outer lateral surface 70 and which forms the outer annular surface 85, a second (straight) segment contiguous to the first one from an end opposite the top of the piston and extending towards the sliding axis X and forming the annular edge 95, and a third straight segment extending from a distal end from the first segment which extends towards the piston top 55 and forms the inner annular surface 90.

In the embodiment illustrated, the annular sealing lip is made in a monolithic body with the rest of the piston, either with the top of the piston or with the first cylindrical body of the piston.

It should be noted that a monolithic body is defined as a body obtained by cooling and possibly subsequent mechanical processing of a single cast or injection of a material into a mould.

This material of the annular sealing lip (therefore also of the piston) is a polymeric material, in particular not elastomeric.

As mentioned above, the piston is of the differential type.

With particular reference to figures 2 and 3, the tubular body therefore comprises a first cylinder 100 which houses to size (with reduced clearance) the first cylindrical body 60 sliding along the sliding axis X, and which is contacted by the annular sealing lip 80, and a second cylinder 105 which houses to size (with reduced clearance) the second cylindrical body 65 sliding along the sliding axis X.

The first cylinder comprises a cylindrical inner surface 110 over which the piston, i.e. the annular sealing lip 80, slides, and, more specifically, over which the outer annular surface 85 of the annular sealing lip 80 slides. The first cylinder also comprises a cylindrical outer surface facing the outside of the proportional volumetric distributor.

The second cylinder 105 is internally coaxial to the first cylinder with respect to the sliding axis X and is tube shaped so that between a portion of the cylindrical inner surface 110 of the first cylinder 100 and the second cylinder 105 there is an annular cavity in direct fluid communication with the outlet conduit.

In particular, the second cylinder 105 comprises a cylindrical inner surface 115, which defines an axial cavity 116 in direct fluid communication with the inlet conduit 10 and along which the piston, i.e. the second cylindrical body of the piston, slides. The second cylinder then comprises a cylindrical outer surface 120 which is distanced from the inner cylindrical surface 110 of the first cylinder 100 so as to define said annular cavity.

Such annular cavity partly defines the second chamber 50 (together with the first cylindrical body and the annular sealing lip).

Additionally, the second cylinder has a smaller longitudinal extension along the sliding axis X than the longitudinal extension of the first cylinder. In particular, the second cylinder has a greater minimum distance from the cover than the first cylinder (which, for example, contacts the cover directly).

The piston 90 may comprise a further annular sealing lip 125, with a substantially similar shape to the annular sealing lip 80 which slides in contact with the cylindrical inner surface 115 of the second cylinder 105 so as to create a fluid seal separating the axial cavity 116 of the second cylindrical body from the second chamber 50.

The volumetric dosing unit comprises an elastic element which pushes the annular sealing lip 80, i.e. the (free) end portion of the annular sealing lip against the cylinder, i.e. the first cylinder 100, even more specifically against the inner cylindrical surface 110 of the first cylinder 100.

In particular, the elastic element pushes on the inner annular surface 90 of the annular sealing lip 80, preferably pushing only on the inner annular surface and only a portion of such proximal surface or at the free end of the annular sealing lip.

The annular sealing lip is pushed by the elastic element along the entire circumferential extension about the sliding axis X. For this purpose, the elastic element is annular and circular in shape.

Such elastic element is in direct contact with the annular sealing lip 80 at the points where it pushes it defined above, in particular the elastic element is in direct contact with the inner annular surface 90, in particular in a proximal portion thereof or at the free end of the annular sealing lip.

The annular sealing lip 80 is in contact with the elastic element at least along an imaginary circumference identifiable on the inner annular surface 90 and coaxial to the sliding axis X. In the illustrated embodiment, the elastic element is circular in shape. In particular, it is toroidal in shape.

As far as materials are concerned, the elastic element is preferably an elastomeric material body (i.e. the material is an elastomer).

In the illustrated and preferred embodiment, the elastic element is a toroidal body made of an elastomeric material, such as an O-ring 130.

In the figures, the elastic element is shown in a non-deformed configuration and the annular sealing lip is shown in a configuration subsequent to the installation of the elastic element, but prior to its insertion into the cylinder. In particular, the bending of the annular sealing lip and the compression of the elastic element due to the contact of the annular sealing lip with the cylinder is not represented. As a result, an interpenetration between the annular lip and the cylinder appears in the figures, due to the way three-dimensional CAD works, and which does not exist in reality.

The elastic element is held in a predetermined position in which it pushes on the lip by a locking device integral with the piston (without residual degrees of freedom), for example made in a separate body from the piston 30, or by the first cylinder, preferably made in a separate body from the piston and removably associated with said piston 30.

In practice, the locking device is shaped in such a way that once installed it forces the elastic element into a position where it touches the annular sealing lip and generates a thrust thereon.

For example, in the top 55, a seat for housing the locking device may be provided which is shaped to house the locking device in a position which allows the elastic element to be placed in the predetermined position. In the embodiment illustrated, such seat comprises a groove made in the top 55.

The locking device is rigid, i.e. it cannot be deformed elastically or plastically under the normal working loads to which it is subjected.

The locking device, i.e. a locking body of the locking device, comprises a housing seat adapted to house the elastic element at least partially. This housing is shaped so as to prevent at least one displacement of the elastic element in the direction towards the sliding axis X and in the direction away from the top of the piston.

Therefore, the locking device, i.e. the locking body, must comprise at least one wall running parallel to the longitudinal axis X, for example also eccentrically thereto, and one wall distal from the top of the piston so that there can be a cavity between the two, and which extends transversely to the longitudinal axis X

An embodiment which cooperates with the preferred embodiment of the elastic element, namely the elastic element with a toroidal body and made of elastomeric material, is illustrated in the figures.

In such a case, the locking device, i.e., the locking body, is substantially shaped like a rigid (metallic) ring 135 which clamps the elastic element between itself and the sealing annular lip, and which is preferably removably fixed to the top of the piston. For example, such a ring has a cross-sectional profile with respect to a section plane containing the sliding axis X (or more precisely the cross-sectional profile of a half sectional plane containing the sliding axis X and having said axis as its extreme) shaped like an L rotated by 180°.

The area where the L-forming segments are joined is essentially the housing for the elastic element.

In particular, the locking body, or locking ring in this case, comprises a first wall 140, for example annular, which rises from the top of the piston in a direction away from it, for example along a direction substantially parallel to the sliding axis X. The first wall is shaped like a cylindrical tubular body coaxial to the sliding axis X provided with a cylindrical (or truncated cone) outer surface 145 (coaxial to the sliding axis X and facing in the opposite direction thereto) which is in contact with the annular-shaped, preferably toroidal elastic element.

The first annular wall rises from a portion of the top proximal to the annular sealing lip 80. The locking body, or locking ring, comprises a second wall 150, for example annular, extending directly and contiguously from the first annular wall 140 in a direction away from the sliding axis of the piston 30, for example along a plane perpendicular to the sliding axis X.

This second wall, for example shaped like a centrally perforated disc, comprises an annular surface 155 facing the top and in contact with the annular-shaped, preferably toroidal, elastic element.

The annular-shaped elastic element is thus housed in a space comprised between the cylindrical outer surface 145 and the annular surface 155 (which thus form the housing for the elastic element).

In addition, the annular shaped elastic element is directly interposed in contact (only) between the annular sealing lip 80, i.e. the inner annular surface 90, the first wall 140, i.e. the cylindrical outer surface 145, and the second annular wall 150, i.e. the annular surface 155. In particular, the elastic element is gripped, e.g. clamped, between these elements and is compressed by them.

Since a closed volume is formed between the inner annular surface 90, the elastic element and the first wall of the locking device (and a possible portion of the top 55 between the annular sealing lip and the first wall 140), the first wall comprises at least one through hole 160, preferably a plurality of through holes 160 circumferentially arranged around the sliding axis X, which passes through it from side to side and which places the closed volume in direct fluid communication with the first chamber 50.

On the other hand, the elastic element and the first wall are continuous bodies, i.e. their external surfaces are continuous without interruption.

The locking device may comprise a locking flange 165 which is derived from the first wall at a right angle thereto, e.g. this locking flange is housed in the housing seat of the locking device made in the top of the piston.

The fixing flange in particular develops from the first wall 140 (at one end of the first wall proximal to the top of the piston) in the direction towards the sliding axis X.

This fixing flange is screwed, e.g. removably, to the piston by means of threaded connecting members 170.

In the embodiment illustrated, there are a plurality of bolts which clamp the locking flange and the second cylindrical body 65.

The axial cavity of the second cylinder 105, which is in communication with the inlet conduit 10, is in communication with the outlet conduit 26 by means of a valve system. For a detailed description of this valve system, please refer to document US201916423366, which is incorporated herein for reference purposes.

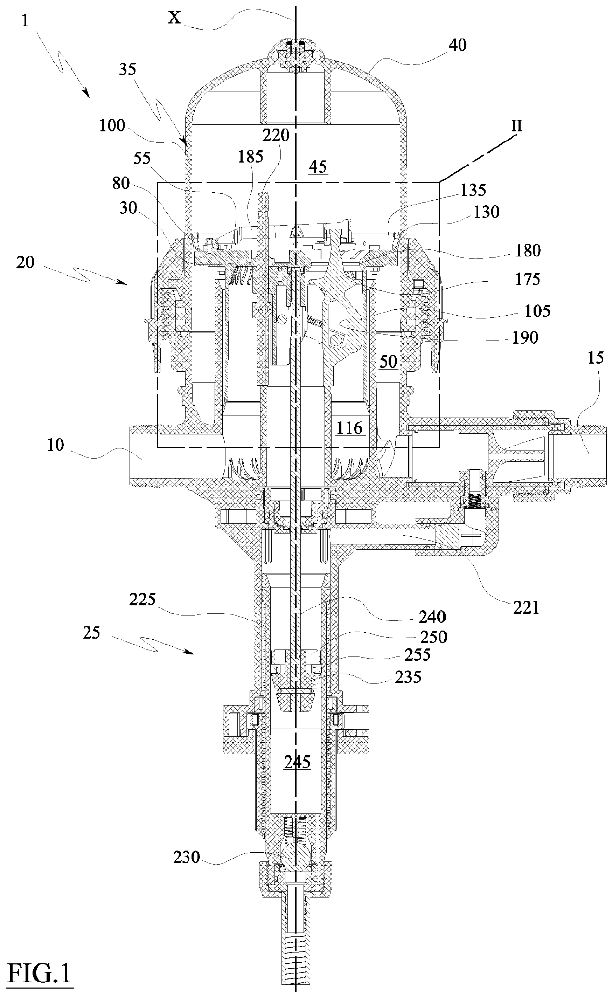

With particular reference to figures 1 and 2, the valve system comprises at least one internal valve and one external valve (not illustrated in the figures), wherein the expression internal valve means a valve proximal to the sliding axis X along a radial direction and the expression external valve means a valve radially further away from the sliding axis X than the internal valve.

The internal valve is interposed between the axial cavity of the second cylindrical body 65 and the first chamber 45 and, for example, comprises a shutter 175 adapted to be engaged in a relative valve seat 180 made in the first cylindrical body, at a through hole (parallel to the sliding axis X) which places the axial cavity of the second cylindrical body and the first chamber 45 in fluid communication.

The external valve, on the other hand, controls the opening and closing of a through made hole in the first cylindrical body, which places the first chamber 45 in fluid communication with the second chamber 50. The external valve comprises a shutter adapted to be engaged in a valve seat made at this through-hole.

The valves are associated with a rocker 185 that is articulated, at one end, to the top of the piston so as to perform small oscillations, about an articulation pin thereof, alternatively between a first position, in which the internal valve is closed and the external valve is open, and a second position, in which the internal valve is open and the external valve is closed. In particular, the internal valve is constrained to the rocker by a portion thereof, so that when the rocker rotates from the second to the first position, the portion of the internal valve is moved upwards and causes the shutter to close the valve seat.

On the other hand, the shutter of the external valve is directly supported by the rocker and, by rotating from the second to the first position, the rocker brings the shutter to a position distal from the valve seat, opening the corresponding external valve.

The movement of the rocker, which determines the respective opening and closing positions of the internal and external valves, is delegated to a spring activation mechanism.

In the embodiment illustrated the spring activation mechanism is configured to be engaged in a slot 190, provided with a lower surface and an upper surface, e.g. opposite each other and aligned along a parallel direction to the sliding direction X, obtained in a body of the shutter 175.

Such elastic activation mechanism comprises a pair of connecting rods 195 (Figure 7), where each connecting rod is associated with a respective spring 200.

Each connecting rod is fixed to a respective hinge 205 placed on the piston 30 and, through a hinge 210, which is housed in the slot 190, at a first end of the respective spring 200.

In turn the springs 200 are fixed in a second end thereof to a hinge 215 placed on a rod 220 slidably associated with the piston 30 i.e. that is constrained to the piston 30 so as to be able to translate with respect to the piston itself.

In particular, the rod 220 can slide vertically inside a through hole 26a obtained in the body of the piston 30 itself.

Furthermore, the rod 220 has a raised element constrained to slide within a guide 52 of the piston 30 that terminates at one end with a lower abutment element and at the opposite end with an upper abutment element, where said abutment elements can alternatively engage with the raised element of the rod to determine the respective stroke ends thereof along the translation axis of the rod, an axis which is parallel to the sliding axis X.

The position of the rod 220 in relation to the piston 30 determines the activation of the spring activation mechanism and regulates the upward and downward stroke of the piston.

With reference to figure 1, the pump 25 is fixed below the tubular body of the motor 20 which, as mentioned, has the function of supplying an auxiliary fluid to the motor.

In the embodiment illustrated, the volumetric dosing unit is provided with a by-pass line 221 interposed between the pump and the outlet conduit, into which the auxiliary fluid is pumped where it mixes with the primary fluid. If this bypass were not present, the fluid would be pumped to the cavity of the second cylinder.

The pump 30 comprises a tubular sleeve 225 which is coaxial and connected to the motor body, in particular to the tubular body of the motor.

The tubular sleeve 225 at one end distal from the motor body 20 has a receiving seat of a one-way valve 230, for example of the ball type, which allows the secondary fluid to enter the tubular sleeve but prevents it from leaving.

A small piston 62 of the pump 30 slides within the sleeve 225, which is rigidly attached to the piston 30 of the motor sliding along the sliding axis by means of a rod 240.

The internal volume of the sleeve, together with the small piston 235 partially define a dosing chamber 245 of the secondary fluid. In particular, the volume of the dosing chamber 245 is defined by the small piston 235, by the sleeve 80 and by the valve 90.

The small piston 235 comprises a plurality of openings 250, arranged radially with respect to the sliding axis of the small piston 235 itself, for the outflow of the auxiliary fluid contained in the dosing chamber 245 towards the body of the motor 20, i.e. towards the bypass conduit. A valve is associated with said openings 250 which allows the passage of the auxiliary fluid through them. In the embodiment illustrated, said valve comprises a friction gasket 255, housed in an annular groove of the small piston 235. The friction gasket 255, during the descent of the small dosing piston 235, by rubbing along the inner surface of the sleeve reaches a position in which it enables the outflow of the auxiliary fluid, previously sucked, through the channels 250, whereas during the ascent of the small dosing piston 235, by rubbing along the inner surface of the sleeve 220, the gasket 255 reaches a position in which it prevents the passage of the auxiliary fluid through the channels 250, producing at the same time a depression in the chamber 245.

The ascent and descent movement of the small dosing piston 235 therefore allows the auxiliary fluid to be sucked into the dosing chamber 245 and to be supplied to the motor body 20, i.e. to the bypass conduit.

The operation of the proportional volumetric dosing unit 10 takes place according to the following methods.

When the main fluid is supplied to the motor through the inlet conduit the piston is in the bottom dead centre and is pushed due to the effect of the main fluid towards the top dead centre. In fact, in this position the internal valve of the piston is closed and the external valve is open and the main fluid exercises a pressure on part of the lower surface of the upper portion of the piston which translates towards the top dead centre.

The movement towards the top dead centre of the piston also draws the rod of the small dosing piston and the friction gasket reaches the position in which it hermetically closes the space between said gasket and the inner surface of the sleeve preventing the outflow of the auxiliary fluid through the channels and therefore so as to pump a predefined amount of auxiliary fluid into the bypass conduit, an amount that depends on the volume of said dosing chamber.

The movement towards the top dead centre of the piston draws with it also the rod, the raised element of which is kept in abutment against the upper abutment element of the guide of the piston.

The ascent movement of the rod continues until the rod meets an abutment stroke end 210 placed in the lower portion of the cover of the motor body.

At this point, the rod stops but the piston continues its stroke upwards for a short stretch as said piston can continue to slide towards the other one thanks to the through hole in which the rod slides.

As the springs are fixed on one side to the pin on the rod, and on the other side to the hinge, they are placed in traction and are inclined gradually downwards assuming a greater inclination than that of the connecting rods.

At that point the spring mechanism is triggered and the connecting rods are brought from the position in which they were in contact with the upper surface of the hole of the slot to a position in which they come into contact with the lower surface of the hole of the slot.

Thus the connecting rods open the internal valve, because the shutter of the internal valve moves away from the valve seat and simultaneously, causing the rotation of the rocker, close the external valve.

Therefore, in the first place the thrust of the main fluid on the lower surface of the piston is missing and at the same time the first chamber is also filled with fluid that passes through the open internal valve.

The piston therefore starts to descend towards the bottom dead centre until the rod comes into contact with the shank.

The movement towards the bottom dead centre of the piston is also transmitted to the small dosing piston and the friction gasket reaches the open position of the openings so as to let the auxiliary fluid flow through.

At this point, the rod stops but the piston continues its descent for a short stretch as said piston can still slide with respect to the rod making use of the through hole.

The springs are again placed in traction and are inclined, this time upwards, gradually assuming a greater inclination than that of the connecting rods.

At that point the spring mechanism is triggered again and the connecting rods are snapped from the position in which they were in contact with the lower surface of the slot to a position in which they come into contact with the upper surface of the slot.

In this way they close the internal valve and simultaneously open the external valve and the cycle starts again with the methods previously seen.

The invention thus conceived is susceptible to several modifications and variations, all falling within the scope of the inventive concept.

Moreover, all the details can be replaced by other technically equivalent elements.

In practice, the materials used, as well as the contingent shapes and sizes, can be whatever according to the requirements without for this reason departing from the scope of protection of the following claims.

## Claims

1. A proportional volumetric dosing unit (1) which comprises a pump (25) provided with a piston (235) adapted to supply an auxiliary fluid to a motor (20) of the proportional volumetric dosing unit itself, which moves the piston (235) of the pump and is fluidly connected to an inlet conduit (10) of a main fluid and an outlet conduit (15) of a mixed fluid, said motor comprising a piston (30) slidably housed in a cylinder (100) of the motor along a sliding axis (X) and connected to the piston (235) of the pump to move it,
wherein the piston (30) comprises an annular sealing lip (80) protruding from a top (55) of the piston (30), and an end portion thereof distal from the top of the piston is applied in contact to the cylinder (100) making a fluid seal,
said proportional volumetric dosing unit being **characterized in that** it comprises an elastic element (130) which pushes the annular sealing lip (80) against the cylinder (100), wherein the elastic element (130) is held in a predetermined position where it is applied onto the lip by a locking device (135) integral or removably associated with the piston (30).

2. Proportional volumetric dosing unit (1) according to claim 1, wherein the annular sealing lip (80) comprises a free end portion and an opposite end portion proximal to the top (55) of the piston, and wherein the elastic element (130) is in contact with the free end portion.

3. Proportional volumetric dosing unit (1) according to claim 1, wherein the elastic element (130) is a body made of elastomeric material.

4. Proportional volumetric dosing unit according to claim 3, wherein the annular sealing lip (80) is made of a non-elastomeric polymeric material.

5. Proportional volumetric dosing unit (1) according to claim 3, wherein the elastic element (130) is annular in shape.

6. Proportional volumetric dosing unit (1) according to claim 1, wherein the annular sealing lip (80) comprises an outer annular surface (85) facing the cylinder (100) and partly in contact therewith, and an inner annular surface (90) facing in the opposite direction to the outer annular surface and which is in direct contact with the elastic element (130), wherein the locking device comprises a locking body (135) provided with a wall (140) which rises from the top (55) of the piston and which is in contact with the elastic element (130), wherein there is a closed volume between the inner annular surface (90), the elastic element (130) and the wall (140) of the locking device,
and wherein the wall (140) comprises a through hole (160) which passes through it and which is in direct fluid communication with the closed volume.

7. Proportional volumetric dosing unit (1) according to claim 1, wherein the locking device comprises a locking body (135) provided with a first annular wall (140), which rises from a portion of the piston top closer to the sliding axis than a portion of the piston top from which the annular sealing lip rises, and a second annular wall (150) which extends contiguously from the first annular wall in a direction away from the sliding axis (X) of the piston, and wherein the elastic element (130) is interposed directly in contact between the annular sealing lip (80), the first annular wall (140) and the second annular wall (150).

8. Proportional volumetric dosing unit (1) according to claim 7, wherein the locking device comprises a locking flange (165) which is derived from the first annular wall (140) at a right angle thereto and which is screwed to the top of the piston.

9. Proportional volumetric dosing unit (1) according to claim 1, wherein the annular sealing lip (80) is made in a monolithic body with the rest of the piston (30).

## Patentansprüche

1. Proportionalvolumetrische Dosiereinheit (1), die eine Pumpe (25) umfasst, die mit einem Kolben (235) versehen ist, der angepasst ist, um einem Motor (20) der proportionalvolumetrischen Dosiereinheit an sich, der den Kolben (235) der Pumpe bewegt und fluidisch mit einer Einlassleitung (10) für ein Hauptfluid und einer Auslassleitung (15) für ein gemischtes Fluid verbunden ist, ein Hilfsfluid zuzuführen, der Motor umfassend einen Kolben (30), der in einem Zylinder (100) des Motors entlang einer Gleitachse (X) verschiebbar untergebracht und mit dem Kolben (235) der Pumpe verbunden ist, um diesen zu bewegen,
wobei der Kolben (30) eine ringförmige Dichtlippe (80) umfasst, die von einer Oberseite (55) des Kolbens (30) hervorsteht, und ein Endabschnitt davon, der von der Oberseite des Kolbens distal ist, in Kontakt mit dem Zylinder (100) gebracht wird, wodurch eine Fluiddichtung entsteht,
die proportionalvolumetrische Dosiereinheit **dadurch gekennzeichnet ist, dass** sie ein elastisches Element (130) umfasst, das die ringförmige Dichtlippe (80) gegen den Zylinder (100) drückt, wobei das elastische Element (130) in einer vorbestimmten Position gehalten wird, in der es durch eine Verriegelungsvorrichtung (135), die mit dem Kolben (30) einstückig oder abnehmbar assoziiert ist, an die Lippe angelegt wird.

2. Proportionalvolumetrische Dosiereinheit (1) nach Anspruch 1, wobei die ringförmige Dichtlippe (80) einen freien Endabschnitt und einen gegenüberliegenden Endabschnitt proximal zu der Oberseite (55) des Kolbens umfasst, und wobei das elastische Element (130) in Kontakt mit dem freien Endabschnitt ist.

3. Proportionalvolumetrische Dosiereinheit (1) nach Anspruch 1, wobei das elastische Element (130) ein Körper ist, der aus elastomerischem Material gefertigt ist.

4. Proportionalvolumetrische Dosiereinheit nach Anspruch 3, wobei die ringförmige Dichtlippe (80) aus einem nicht-elastomerischen polymeren Material gefertigt ist.

5. Proportionalvolumetrische Dosiereinheit (1) nach Anspruch 3, wobei das elastische Element (130) von ringförmiger Form ist.

6. Proportionalvolumetrische Dosiereinheit (1) nach Anspruch 1, wobei die ringförmige Dichtlippe (80) eine äußere ringförmige Oberfläche (85), die dem Zylinder (100) zugewandt und teilweise in Kontakt damit ist, und eine innere ringförmige Oberfläche (90), die der entgegengesetzte Richtung zu der äußeren ringförmigen Oberfläche zugewandt und in direktem Kontakt mit dem elastischen Element (130) ist, umfasst, wobei die Verriegelungsvorrichtung einen Verriegelungskörper (135) umfasst, der mit einer Wand (140) versehen ist, die sich von der Oberseite (55) des Kolbens erhebt und die in Kontakt mit dem elastischen Element (130) ist, wobei es zwischen der inneren ringförmigen Oberfläche (90), dem elastischen Element (130) und der Wand (140) der Verriegelungsvorrichtung ein geschlossenes Volumen gibt,
und wobei die Wand (140) ein Durchgangsloch (160) umfasst, das durch sie verläuft und das in direkter Fluidverbindung mit dem geschlossenen Volumen ist.

7. Proportionalvolumetrische Dosiereinheit (1) nach Anspruch 1, wobei die Verriegelungsvorrichtung einen Verriegelungskörper (135) umfasst, der mit einer ersten ringförmigen Wand (140) versehen ist, die sich von einem Abschnitt der Oberseite des Kolbens näher an der Gleitachse erhebt als ein Abschnitt der Oberseite des Kolbens, von dem sich die ringförmige Dichtlippe erhebt, und einer zweiten ringförmigen Wand (150), die sich angrenzend an die erste ringförmige Wand in einer Richtung weg von der Gleitachse (X) des Kolbens erstreckt, und wobei das elastische Element (130) direkt in Kontakt zwischen die ringförmige Dichtlippe (80), die erste ringförmige Wand (140) und die zweite ringförmige Wand (150) eingefügt ist.

8. Proportionalvolumetrische Dosiereinheit (1) nach Anspruch 7, wobei die Verriegelungsvorrichtung einen Verriegelungsflansch (165) umfasst, der von der ersten ringförmigen Wand (140) rechtwinklig abgeleitet ist und mit der Oberseite des Kolbens verschraubt ist.

9. Proportionalvolumetrische Dosiereinheit (1) nach Anspruch 1, wobei die ringförmige Dichtlippe (80) in einem monolithischen Körper mit dem Rest des Kolbens (30) gefertigt ist.

## Revendications

1. Doseur volumétrique proportionnel (1) comprenant une pompe (25) équipée d'un piston (235) conçu pour alimenter en fluide auxiliaire un moteur (20) du doseur volumétrique proportionnel lui-même, lequel déplace le piston (235) de la pompe et qui est relié hydrauliquement à un conduit d'entrée (10) d'un fluide principal et à un conduit de sortie (15) d'un fluide mélangé, ledit moteur comprenant un piston (30) logé de manière coulissante dans un cylindre (100) du moteur le long d'un axe de coulissement (X) et relié au piston (235) de la pompe pour le déplacer,
dans lequel le piston (30) comprend une lèvre d'étanchéité annulaire (80) faisant saillie depuis une partie supérieure (55) du piston (30), et dont une partie d'extrémité, située à l'opposé de la partie supérieure du piston, est en contact avec le cylindre (100) de manière à former un joint d'étanchéité aux fluides,
ledit doseur volumétrique proportionnel étant **caractérisé en ce qu'**il comprend un élément élastique (130) qui appuie la lèvre d'étanchéité annulaire (80) contre le cylindre (100), l'élément élastique (130) étant maintenu dans une position prédéterminée où il s'applique sur la lèvre au moyen d'un dispositif de verrouillage (135) solidaire du piston (30) ou associé à celui-ci de manière amovible.

2. Doseur volumétrique proportionnel (1) selon la revendication 1, dans lequel la lèvre d'étanchéité annulaire (80) comprend une partie d'extrémité libre et une partie d'extrémité opposée située à proximité de la tête (55) du piston, et dans lequel l'élément élastique (130) est en contact avec la partie d'extrémité libre.

3. Doseur volumétrique proportionnel (1) selon la revendication 1, dans lequel l'élément élastique (130) est un corps réalisé en un matériau élastomère.

4. Doseur volumétrique proportionnel selon la revendication 3, dans lequel la lèvre d'étanchéité annulaire (80) est réalisée en un matériau polymère non élastomère.

5. Doseur volumétrique proportionnel (1) selon la revendication 1, dans lequel l'élément élastique (130) a une forme annulaire.

6. Doseur volumétrique proportionnel (1) selon la revendication 1, dans lequel la lèvre d'étanchéité annulaire (80) comprend une surface annulaire extérieure (85) orientée vers le cylindre (100) et en contact partiel avec celui-ci, et une surface annulaire intérieure (90) orientée dans la direction opposée à la surface annulaire extérieure et qui est en contact direct avec l'élément élastique (130), dans lequel le dispositif de verrouillage comprend un corps de verrouillage (135) muni d'une paroi (140) qui s'élève depuis le sommet (55) du piston et qui est en contact avec l'élément élastique (130), dans lequel il existe un volume fermé entre la surface annulaire intérieure (90), l'élément élastique (130) et la paroi (140) du dispositif de verrouillage, et dans lequel la paroi (140) comporte un trou débouchant (160) qui la traverse et qui est en communication fluidique directe avec le volume fermé.

7. Doseur volumétrique proportionnel (1) selon la revendication 1, dans lequel le dispositif de verrouillage comprend un corps de verrouillage (135) équipé d'une première paroi annulaire (140), qui s'élève à partir d'une partie de la face supérieure du piston située plus près de l'axe de coulissement qu'une partie de la face supérieure du piston à partir de laquelle s'élève la lèvre d'étanchéité annulaire, et d'une deuxième paroi annulaire (150) qui s'étend de manière contiguë à partir de la première paroi annulaire dans une direction éloignée de l'axe de coulissement (X) du piston, et dans lequel l'élément élastique (130) est interposé directement en contact entre la lèvre d'étanchéité annulaire (80), la première paroi annulaire (140) et la deuxième paroi annulaire (150).

8. Dosage volumétrique proportionnel (1) selon la revendication 7, dans lequel le dispositif de verrouillage comprend une bride de verrouillage (165) qui est dérivée de la première paroi annulaire (140) à angle droit par rapport à celle-ci et qui est vissée sur la partie supérieure du piston.

9. Doseur volumétrique proportionnel (1) selon la revendication 1, dans lequel la lèvre d'étanchéité annulaire (80) est réalisée d'un seul tenant avec le reste du piston (30).
